# EUROPEAN PATENT APPLICATION

(11) **EP 3 903 944 A1**
(43) Date of publication of application: **03.11.2021**
(21) Application number: 19902222.9
(22) Date of filing: 19.12.2019
(51) Int. Cl.: B05B 3/10, B05B 15/25, A23N 12/02

(54) **SPRAYING DISC FOR FRUIT-TREATMENT SYSTEMS**

(30) Priority: 28.12.2018 ES 201832007 U
(71) Applicant: Tecnidex, Fruit Protection, S.A., 46988 Paterna (Valencia) (ES)
(72) Inventor: OLIVARES VICENTE, Javier, 46988 Paterna (Valencia) (ES); SERRANO HERRERO, José Ignacio, 46988 Paterna (Valencia) (ES); CARRIÓ SOSPEDRA, José Antonio, 46988 Paterna (Valencia) (ES)
(74) Representative: HGF
(86) International application number: PCT/ES2019/070866
(87) International publication number: WO 2020/136293

(57) **Abstract**

Disclosed herein is a spray disc (1) for fruit treatment systems. The disc comprises: a first ring (2); a second ring (3) concentric with the first ring (2) and of greater diameter than the first ring (2); a central body (6) configured to be connected to a fruit treatment system; first blades (4) connecting the central body (6) with the first ring (2); and second blades (5) connecting the first ring (2) with the second ring (3). When a liquid is poured over the first blades (4) at a constant flow rate and the spray disc rotates at a preset rotational speed, the liquid is propelled in the shape of a circular ring (7) by the combined action of the first blades (4) and the laminar flow generated by the second blades (5).

## Description

### SUBJECT MATTER OF THE INVENTION

The spray disc object of the invention is applicable in the treatment of fruits, vegetables and the like, which are transported by means of a conveyor over which a product is sprayed.

The object of the invention is to improve application efficiency in such a way that it is possible to make much better use of the amount of product to be applied, with the corresponding savings in costs.

### FIELD OF THE INVENTION

This invention relates to a spray disc for fruit treatment systems.

The technical field of the invention lies within the nozzles used by fruit and vegetable treatment systems.

### BACKGROUND OF THE INVENTION

In the state of the art nozzles for spraying liquids over items such as fruits and vegetables are known.

An example of a spray nozzle is disclosed in patent application publication number ES 0477881A1. This patent application discloses a spray nozzle device for use with an atomizer for hydraulically spraying and sprinkling liquids, the atomizer having conduit means communicating with a source of liquid under pressure.

The problem with the nozzles of the state of the art is that they use a large amount of liquid to achieve homogeneous spraying of the liquid on the product to be treated, which product can be a fruit or a vegetable within the scope of this invention.

Therefore, an excess of liquid is used in the treatment of fruits and vegetables that generates an unnecessary waste of liquid as well as greater pollution of the environment since the treatment liquid in most cases is a chemical product.

### DESCRIPTION OF THE INVENTION

A first aspect of the invention proposes a spray disc for fruit treatment systems. The spray disc comprises a first ring, a second ring concentric with the first ring and of greater diameter than the first ring, a central body configured to be connected to a fruit treatment system, first blades connecting the central body with the first ring, and second blades connecting the first ring with the second ring. With this configuration, when a liquid is poured over the first blades at a constant flow rate and the spray disc rotates at a preset rotational speed, the liquid is propelled in the shape of a circular ring by the combined action of the first blades and the laminar flow generated by the second blades. That is, the blades of the first ring propel the liquid and the blades of the second ring only propel laminar air. Therefore, the liquid receives the combined action of the blades of the first ring and the blades of the second ring thus producing a homogeneous and uniform spray action.

In one embodiment, the first blades and the second blades have an inclination of between 30° and 60°.

In another embodiment, the first blades and the second blades have an inclination of 45°.

In another embodiment, the first blades have the same inclination as the second blades.

In another embodiment, the first blades have a different inclination than the second blades.

A second aspect of the invention discloses a fruit treatment system comprising the spray disc defined in the first aspect of the invention for any one of the embodiments.

In one embodiment, the fruit treatment system further comprises a rotor attached to the central body, where the rotor rotates the spray disc with a preset rotational speed. In particular, the preset rotational speed is between 1,200 rpm and 2,500 rpm.

In another embodiment, the fruit processing system further comprises a feeder that provides a liquid at a constant flow rate. The liquid can be water, alcohol, or any other chemical that is commonly used for the treatment of fruits and vegetables. In particular, the constant flow rate is between 0 litres/hour and 40 litres/hour. However, the constant flow rate can be greater than 40 litres/hour.

Preferably, the fruit treatment system comprises several spray discs located above a conveyor belt for fruits, vegetables and the like. The entire width of the conveyor belt can be covered by the combined action of several spray discs.

### BRIEF DESCRIPTION OF THE FIGURES

Figure 1.- shows a plan view of the spray disc of the present invention.
Figure 2.- shows a bottom view of the spray disc of the present invention.
Figure 3.- shows the spraying action obtained in the shape of a circular ring that is obtained by the spray disc of the present invention.
Figure 4.- shows the spray disc connected to the shaft of a rotor of a fruit treatment system.
The liquid dispenser is shown parallel to the rotor axis.
Figure 5.- shows the fruit treatment system that comprises several spray discs covering the entire width of a conveyor belt for fruits, vegetables and the like.

### PREFERRED EMBODIMENT OF THE INVENTION

An exemplary embodiment of the invention is described below for illustrative and nonlimiting purposes.

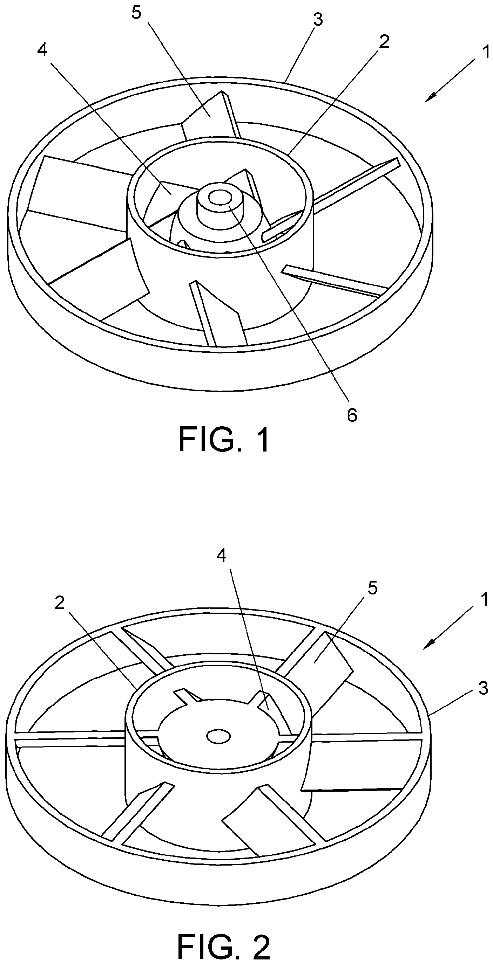

Figures 1 and 2 show the top and bottom views of an embodiment of the spray disc 1. The spray disc 1 is used in fruit treatment systems. Therefore, the spray disc 1 is connected to the rotor 10 in fruit treatment systems, where the rotor rotates the spray disc with a preset angular speed.

The spray disc 1 shown in figures 1 and 2 comprises the first ring 2, the second ring 3 concentric to the first ring 2 and of greater diameter than the first ring 2, the central body 6 configured to be connected to the fruit treatment system, the first blades 4 connecting the central body 6 with the first ring 2, and the second blades 5 connecting the first ring 2 with the second ring 3. With this configuration of the spray disc 1, when a liquid 11 is poured onto the first blades 4 at a constant flow rate and the spray disc 1 rotates at a preset rotational speed, the liquid 11 is propelled in the shape of a circular ring 7 by the combined action of the first blades 4 and the laminar flow generated by the second blades 5. The first blades 4 have the same inclination as the second blades 5, the inclination being 45°.

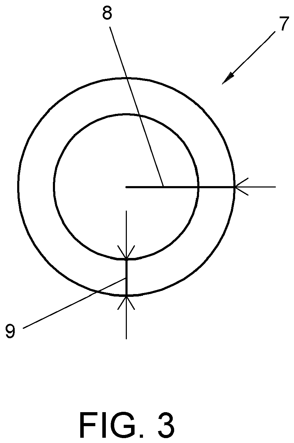

Figure 3 shows the spray in the shape of a circular ring 7 that is produced by the spray disc 1.

As particularly optimal cases of uniform spraying, when the spray disc 1 rotates at 1,500 rpm with a liquid flow rate of 10 litres/hour, a spray is produced in the form of a circular ring of radius (figures 3, 8) 50 cm and thickness (figures 3, 8) 10 cm. Additionally, when the spray disc 1 rotates at 2,000 rpm with a liquid flow rate of 10 litres/hour, a spray is produced in the form of a circular ring of radius (figures 3, 8) 60 cm and thickness (figures 3, 8) 20 cm.

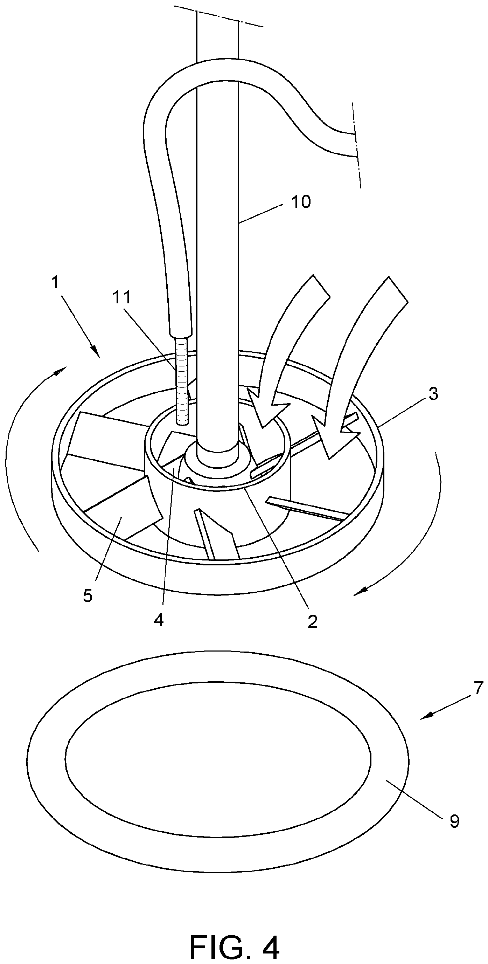

Figure 4 shows the spray disc 1 connected to the rotor 10 of a fruit treatment system. The liquid 11 dispenser is shown parallel to the rotor axis. As can be seen in figure 4, the liquid 11 is only poured over the first blades 4, which take air from the upper part of the disc and propel the air-liquid mixture. The air-liquid mixture propelled by the first blades receives the additional impulse of the air propelled by the second blades 5 (laminar air flow). The combination of the propulsion from the first 4 and second 5 blades causes the liquid to be uniformly distributed in the form of a circular ring 7 with the lowest liquid density (amount of liquid per unit area of the circular ring).

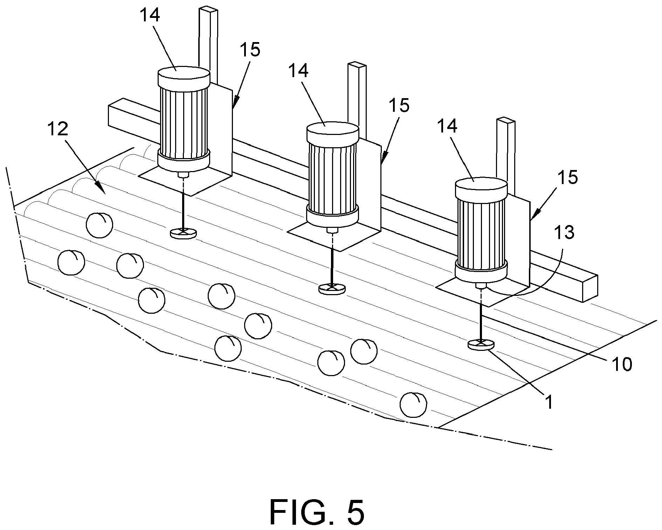

Figure 5 shows a fruit treatment system that integrates several spray discs 1 located above a conveyor belt 12 for fruits, vegetables and the like. The spray discs 1 cover the entire width of the conveyor belt 12 and furthermore, the spray discs are connected to two rotors 10.

Each of the rotors 10 is connected to an output shaft 13 of a motor 14 configured to transmit rotary motion to each spray disc 1 via the output shaft 13 and the rotor 10. The various motors 14 are attached to respective fixed supports 15.

## Claims

1. Spray disc (1) for fruit treatment systems, **characterized in that** it comprises:
• a first ring (2);
• a second ring (3) concentric with the first ring (2) and of greater diameter than the first ring (2);
• a central body (6) configured to be connected to a fruit treatment system;
• first blades (4) connecting the central body (6) with the first ring (2); and
• second blades (5) connecting the first ring (2) with the second ring (3);
in such a way that when a liquid is poured onto the first blades (4) at a constant flow rate and the spray disc rotates at a preset rotational speed, the liquid is propelled in the shape of a circular ring (7) by the combined action of the first blades (4) and the laminar flow generated by the second blades (5).

2. Spray disc according to claim 1, **characterized in that** the first blades (4) and the second blades (5) have an inclination of between 30° and 60°.

3. Spray disc according to claim 1, **characterized in that** the first blades (4) and the second blades (5) have an inclination of 45°.

4. Spray disc according to one of claims 1 to 3, **characterized in that** the first blades (4) have the same inclination as the second blades (5).

5. Spray disc according to one of claims 1 to 3, **characterized in that** the first blades (4) have a different inclination than the second blades (5).

6. Fruit treatment system, **characterized in that** it comprises the spray disc (1) defined in any one of claims 1 to 5.

7. Fruit treatment system according to claim 6, **characterized in that** it additionally comprises a rotor attached to the central body (6), where the rotor rotates the spray disc (1) with a preset rotational speed.

8. Fruit treatment system according to claim 7, **characterized in that** the preset rotation speed is between 1,200 rpm and 2,500 rpm.

9. Fruit treatment system according to claim 6, **characterized in that** it additionally comprises a feeder that provides a liquid at a constant flow rate.

10. Fruit treatment system according to claim 9, **characterized in that** it additionally comprises a constant flow rate of between 0 litres/hour and 40 litres/hour.
